(19)

Europäisches
Patentamt
European
Patent Office
Office européen
des brevets

(11)     **EP 4 510 649 A1**

(12)     **EUROPEAN PATENT APPLICATION**
published in accordance with Art. 153(4) EPC

(43) Date of publication:
**19.02.2025   Bulletin 2025/08**

(21) Application number: **23787794.9**

(22) Date of filing: **13.04.2023**

(51) International Patent Classification (IPC):
**H04W 4/38** (2018.01)

(52) Cooperative Patent Classification (CPC):
**G01S 5/00; G01S 5/02; H04W 4/38; H04W 72/54**

(86) International application number:
**PCT/CN2023/088081**

(87) International publication number:
**WO 2023/198152 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **13.04.2022   CN 202210389846**

(71) Applicant: **Vivo Mobile Communication Co., Ltd.
Dongguan, Guangdong 523863 (CN)**

(72) Inventors:
• **YANG, Kun**
  **Dongguan, Guangdong 523863 (CN)**
• **JIANG, Dajie**
  **Dongguan, Guangdong 523863 (CN)**
• **LI, Jianzhi**
  **Dongguan, Guangdong 523863 (CN)**

(74) Representative: **Lavoix
Bayerstraße 83
80335 München (DE)**

(54)     **SENSING MEASUREMENT METHOD AND APPARATUS, AND RELATED DEVICE**

(57)     This application discloses a sensing measurement method and apparatus, and a related device, pertaining to the field of communication technologies. The sensing measurement method of embodiments of this application includes: receiving, by a first device, a first signal and a second signal that are sent by a second device; and performing, by the first device, sensing measurement based on the first signal and the second signal.

FIG. 5

EP 4 510 649 A1

## Description

## CROSS-REFERENCE TO RELATED APPLICATIONS

This application claims priority to Chinese Patent Application No. 202210389846.3, filed in China on April 13, 2022, which is incorporated herein by reference in its entirety.

## TECHNICAL FIELD

This application pertains to the field of communications technologies, and specifically relates to a sensing measurement method and apparatus, and a related device.

## BACKGROUND

A future mobile communication system may not only have a communication capability, but also have a sensing capability. For the sensing capability, one or more devices with sensing capability can transmit and receive radio signals to sense information such as orientation, distance, and speed of a target object, or to perform detection, tracking, identification, and imaging of a target object, event, or environment. In the future, with the deployment of communication devices with high frequency band and large bandwidth such as millimeter wave and terahertz in mobile communication networks, the sensing resolution will be significantly improved compared with centimeter wave, thus enabling the mobile communication system to provide more refined sensing services.

At present, change of multipath signals is used for measuring a sensing quantity in sensing application scenarios (such as respiratory detection scenarios). However, in an actual environment, multipath signals are very complex, including a large number of transmission paths, and consequently measurement accuracy of the sensing quantity is greatly interfered by signals of unrelated transmission paths, thus leading to relatively large measurement errors.

## SUMMARY

Embodiments of this application provide a sensing measurement method and apparatus, and a related device, which can resolve the problem of relatively large measurement errors for sensing measurement.

According to a first aspect, a sensing measurement method is provided, including:

receiving, by a first device, a first signal and a second signal that are sent by a second device; and
performing, by the first device, sensing measurement based on the first signal and the second signal.

According to a second aspect, a sensing measurement method is provided, including:

sending, by a second device, a first signal and a second signal to a first device; where
the first signal and the second signal are used by the first device to perform sensing measurement.

According to a third aspect, a sensing measurement apparatus is provided where a first device includes the sensing measurement apparatus, and the sensing measurement apparatus includes:

a first receiving module configured to receive a first signal and a second signal that are sent by a second device; and
a measurement module, configured to perform sensing measurement based on the first signal and the second signal.

According to a fourth aspect, a sensing measurement apparatus is provided where a second device includes the sensing measurement apparatus, and the sensing measurement apparatus includes:

a first sending module configured to send a first signal and a second signal to a first device; where
the first signal and the second signal are used by the first device to perform sensing measurement.

According to a fifth aspect, a first device is provided, where the first device includes including a processor and a memory, and a program or instructions capable of running on the processor are stored in the memory; and when the program or the instructions are executed by the processor, the steps of the method according to the first aspect are implemented.

According to a sixth aspect, a first device is provided, including a processor and a communication interface, where the communication interface is configured to receive a first signal and a second signal that are sent by a second device; and the processor is configured to perform sensing measurement based on the first signal and the second signal.

According to a seventh aspect, a second device is provided, where the second device includes including a processor and a memory, and a program or instructions capable of running on the processor are stored in the memory; and when the program or the instructions are executed by the processor, the steps of the method according to the second aspect are implemented.

According to an eighth aspect, a second device is provided, including a processor and a communication interface, where the communication interface is configured to send a first signal and a second signal to a first device; where the first signal and the second signal are used by the first device to perform sensing measurement.

According to a ninth aspect, a sensing measurement system is provided, including a first device and a second device, where the first device may be configured to perform the steps of the sensing measurement method according to the first aspect, and the second device may be configured to perform the steps of the sensing measurement method according to the second aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the second aspect.

According to a twelfth aspect, a computer program/program product is provided, where the computer program/program product is stored in a storage medium, and the computer program/program product is executed by at least one processor to implement the steps of the sensing measurement method according to the first aspect, or the computer program/program product is executed by at least one processor to implement the steps of the sensing measurement method according to the second aspect.

In the embodiments of this application, the first device receives the first signal and the second signal sent by the second device, and the first device performs sensing measurement based on the first signal and the second signal. In this way, sensing measurement is performed based on the received first signal and second signal, and it is not necessary to use the change of multipath signals to implement measurement of sensing quantity, thereby reducing interference of unrelated multipaths on sensing signals in a multipath environment and reducing measurement errors.

**BRIEF DESCRIPTION OF DRAWINGS**

FIG. 1 is a block diagram of a wireless communication system to which the embodiments of this application are applicable;
FIG. 2 is a first schematic diagram of a sensing scenario according to an embodiment of this application;
FIG. 3 is a second schematic diagram of a sensing scenario according to an embodiment of this application;
FIG. 4 is a third schematic diagram of a sensing scenario according to an embodiment of this application;

FIG. 5 is a first flowchart of a sensing measurement method according to an embodiment of this application;
FIG. 6 is a fourth schematic diagram of a sensing scenario according to an embodiment of this application;
FIG. 7 is a first schematic diagram of a channel response of a beam according to an embodiment of this application;
FIG. 8 is a fifth schematic diagram of a sensing scenario according to an embodiment of this application;
FIG. 9 is a second schematic diagram of a channel response of a beam according to an embodiment of this application;
FIG. 10 is a second flowchart of a sensing measurement method according to an embodiment of this application;
FIG. 11 is a first structural diagram of a sensing measurement apparatus according to an embodiment of this application;
FIG. 12 is a second structural diagram of a sensing measurement apparatus according to an embodiment of this application;
FIG. 13 is a structural diagram of a communication device according to an embodiment of this application;
FIG. 14 is a schematic structural diagram of a terminal according to an embodiment of this application; and
FIG. 15 is a schematic structural diagram of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

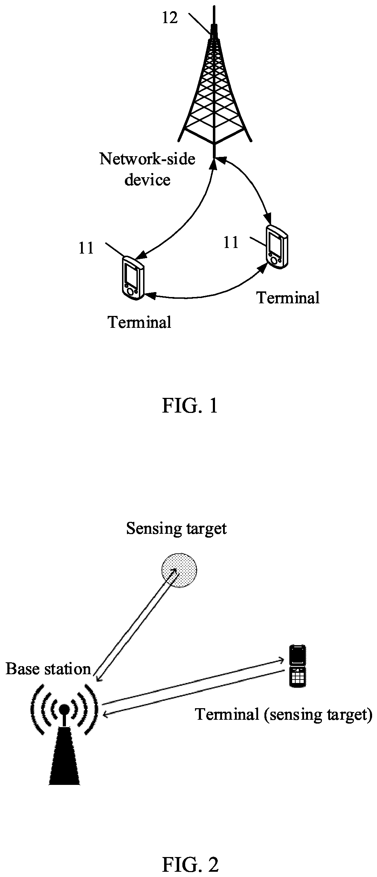

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity Wi-Fi node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following describes integration of communication and sensing (communication-sensing integration) involved in the embodiments of this application.

Future mobile communication systems, such as B5G systems or 6G systems, will not only have communication capabilities, but also have sensing capabilities. For sensing capability, one or more devices with sensing capability can transmit and receive radio signals to sense information such as orientation, distance, and speed of a target object, or to perform detection, tracking, identification, and imaging of a target object, event, or environment. In the future, with the deployment of communication devices with high frequency band and large bandwidth such as millimeter wave and terahertz in mobile communication networks, the sensing resolution will be significantly improved compared with centimeter wave, thus enabling the mobile communication system to provide more refined sensing services.

Sensing deployment schemes may include the following manners:

Single-point centralized sensing: As shown in FIG. 2, a sensing node (for example, a base station) uses a reflected signal (echo) of its own transmitted signal for sensing. The sensing node has the function of self-transmission and self-receiving, for example, different antenna groups are used to isolate a transmitted signal from a received signal. The sensing node determines a status of a sensing target (such as direction, position, movement, or other information) through an echo signal. Single-point centralized sensing requires that sensing nodes have good self-interference cancellation performance to ensure accuracy of sensing detection; and single-point centralized sensing uses a signal sent by a single node as the reference signal, not requiring synchronous cooperation between multiple nodes.

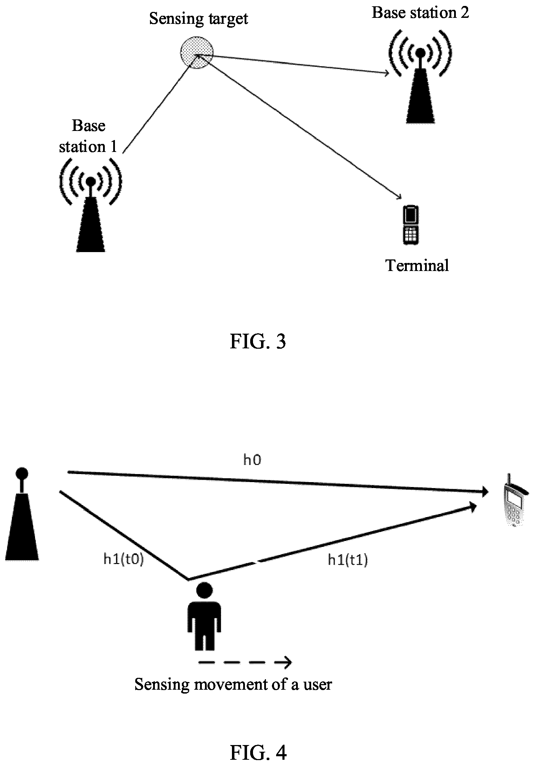

Multi-point distributed sensing: a sending node and receiving node of a sensing signal are located in different locations. The receiving node detects a transmit signal of the sending node for sensing. As shown in FIG. 3, for example, the base station 2 senses environmental information between a base station 1 and a base station 2 by receiving a radio signal from the base station 1. Multi-point distributed sensing usually needs to compare multiple signals to implement sensing measurement, for example, determining a status of the sensing target by comparing a current signal with a historical signal (a previous or pre-stored result). Distributed multi-point sensing avoids an interference isolation problem of self-transmission and self-receiving, and imposes higher requirements for time and frequency synchronization between multiple nodes.

Interactive sensing: A subject, time, frequency, format, or the like for electromagnetic wave transmission is agreed between a sensing node and a target object for sensing through information exchange, so as to complete a sensing process. The sensing target has the function of signal transmission and reception, and performs signal exchange through the sensing procedure to complete sensing measurement or report a sensing result.

An application scenario of sensing may be to sense movement or breathing frequency of human body indoors. In this scenario, multi-point distributed sensing is used for deployment. A base station sends a radio signal, and a terminal receives the radio signal and then determines movement or breathing frequency of a sensing user based on a channel change of the radio signal. As shown in FIG. 4, a received signal of the terminal is expressed by using the following formula:

$$y(t_0) = [h_0 + h_1(t_0)]x + n;$$

and

$$y(t_1) = [h_0 + h_1(t_1)]x + n;$$

where

$h_0$ represents a radio channel response corresponding to a direct path between the base station and the terminal and a path generated by scattering or diffraction of ordinary objects in the environment (except a reconfigurable intelligent surface (Reconfigurable Intelligent Surface, RIS) device), hi(t) represents a radio channel response corresponding to the path generated by reflection of a RIS device between the base station and the terminal at time t, n represents noise introduced by a wireless environment and transceiver device, and x represents a signal sent by the base station.

The base station periodically sends radio signals for channel measurement, and the movement or breathing frequency of the sensing user can be determined according to a changing law of the channel estimation result.

With reference to the accompanying drawings, the following describes in detail, by using some embodiments and application scenarios thereof, a sensing measurement method and apparatus, and a related device provided in the embodiments of this application.

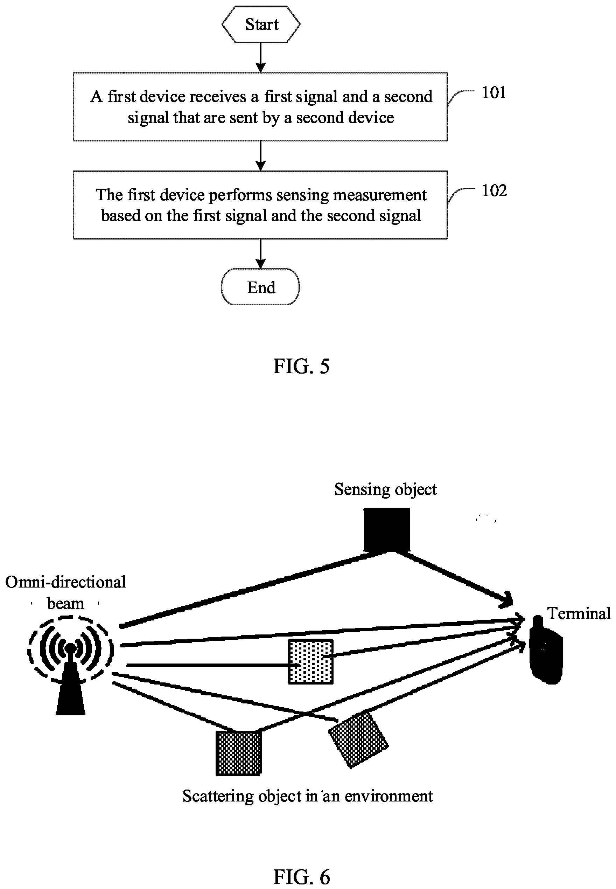

Referring to FIG. 5, FIG. 5 is a flowchart of a sensing measurement method according to an embodiment of this application. As shown in FIG. 5, the sensing measurement method includes the following steps.

Step 101: A first device receives a first signal and a second signal that are sent by a second device.

Step 102: The first device performs sensing measurement based on the first signal and the second signal.

The first signal may be a reference signal, for example, the first signal may be a channel state information reference signal (Channel state information Reference Signal, CSI-RS), a sounding reference signal (Sounding Reference Signal, SRS), a demodulation reference signal (Demodulation Reference Signal, DMRS), a positioning reference signal (Positioning Reference Signal, PRS), a newly designed dedicated reference signal for sensing service, or the like. The second signal may be a reference signal, for example, the second signal may be a CSI-RS, an SRS, a DMRS, a PRS, a newly designed dedicated reference signal for sensing service, or the like.

In an implementation, the first device is a terminal and the second device is a network-side device. The network-side device receives the first signal and the second signal sent by the terminal, performs sensing measurement based on the received first signal and second signal to obtain a measurement result, and sends the measurement result to the network-side device.

In an implementation, the first device is a network-side device and the second device is a terminal.

The network-side device receives a first signal and a second signal sent by the terminal, performs sensing measurement based on the received first signal and second signal to obtain a measurement result.

In addition, the measurement results may include at least one of the following:

delay information;
frequency information;
phase information;
power information;
angle information; and
channel correlation information.

In an implementation, the measurement result may include at least one of the following: a delay of the first signal and/or the second signal, a frequency of the first signal and/or the second signal, a phase of the first signal and/or the second signal, a power of the first signal and/or the second signal, an angle of the first signal and/or the second signal, and a channel correlation between the first signal and the second signal.

It should be noted that in an example where the measurement result includes the delay information, the first device may obtain delays of the first signal and the second signal separately, and the first device may calculate a delay difference between the second signal and the first signal based on the delays of the first signal and the second signal. Alternatively, the first device may obtain delays of the first signal and the second signal separately, the first device sends the delays of the first signal and the delay of the second signal to the second device, and the second device calculates the delay difference between the second signal and the first signal based on the delay of the first signal and the delay of the second signal.

In an implementation, the delay information may be at least one of the delay difference between the second signal and the first signal, a frequency difference between the second signal and the first signal, a phase difference between the second signal and the first signal, a power difference between the second signal and the first signal, an angle difference between the second signal and the first signal, and a channel correlation between the second signal and the first signal.

It should be noted that the network-side device may select the terminal meeting the third condition, or other network-side devices, or other devices for multi-point distributed sensing. The terminal meeting the third condition, or the other network-side devices, or the other devices may have at least one of the following characteristics: fixed position, low moving speed, having a line-of-sight (Line-of-sight, LOS) channel, and signal quality of a sensing beam reaching a predefined threshold. In an implementation, the network-side device may select a plurality of terminals meeting the third condition to perform sensing measurement on a same sensing target and report a measurement result of the sensing measurement.

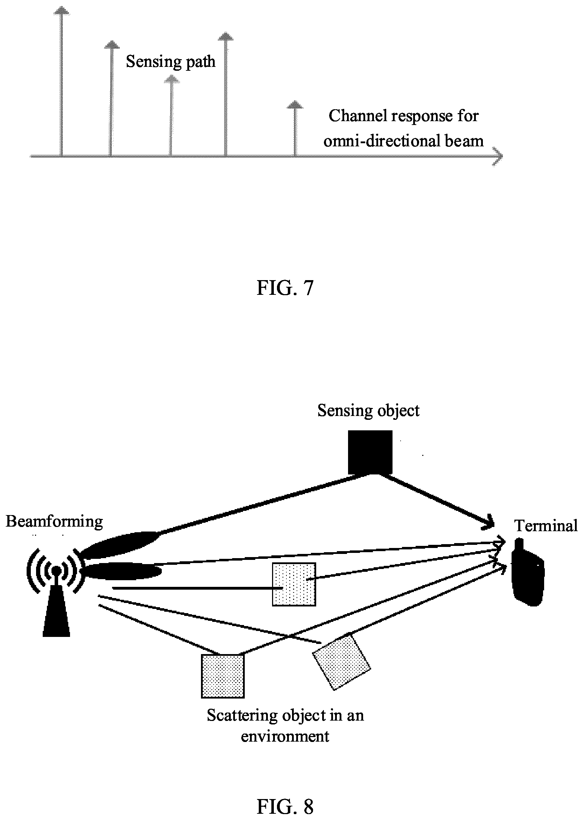

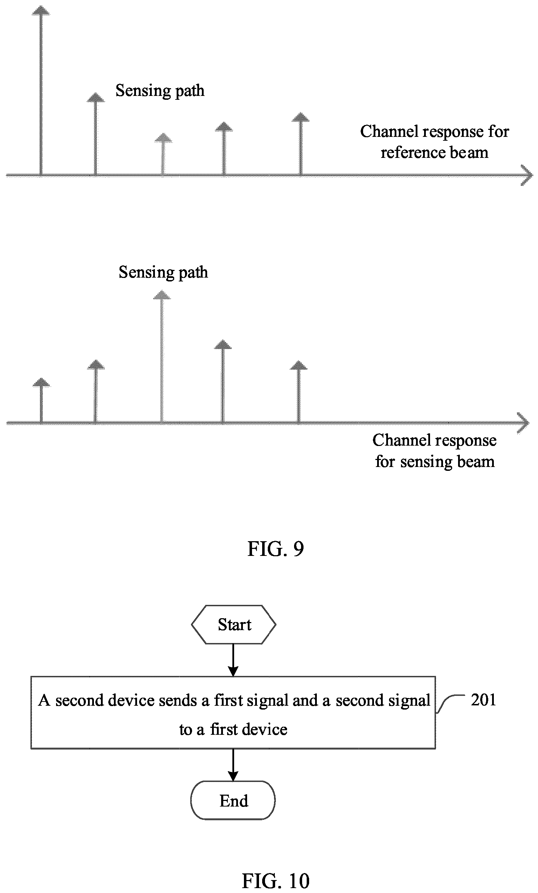

In the related technology, a signal difference between different transmission paths in a multipath channel is used to determine a change status of a sensing object in a propagation environment. As shown in FIG. 6 and FIG. 7, the omni-directional antenna and beamformed signal reception have an impact on the multipath channel response. As shown in FIG. 8 and FIG. 9, using the beamforming-based multi-beam sensing scheme may make the energy of the sensing path higher and the sensing measurement algorithm simpler. The beamforming-based multi-beam sensing scheme may improve the directivity of the sensing signal and eliminate irrelevant multipath interference, thus improving the measurement accuracy.

It should be noted that a transmit beam of the first signal and a transmit beam of the second signal may be the same, or the transmit beam of the first signal and the transmit beam of the second signal may be different. The network-side device may configure signal parameters of the first signal and the second signal for the terminal, so as to concentrate the signal energy on the sensing target and improve a reflected signal energy of the sensing target. Moreover, the beam of the first signal may be a reference beam for sensing measurement, and the beam of the second signal may be a sensing beam for sensing measurement. The sensing signal with beamforming may reduce interference of unrelated multipaths on the sensing signal in the multipath environment, thus improving accuracy of the sensing measurement.

In addition, the distributed multi-beam sensing scheme may be used to reconstruct the communication environment, that is, simultaneous localization and mapping (Simultaneous localization and mapping, SLAM). In the communication environment, assuming that a same reflecting object has specific Doppler (Doppler) characteristics, for example, vibration or shaking frequency of one building or one vehicle is the same, and an object is continuous, the network-side device may implement contour reconstruction of the reflecting object in the communication environment according to angular continuity of the sensing beam and measurement result (Doppler) consistency of the sensing signal during scanning of the sensing beam.

In the embodiments of this application, the first device receives the first signal and the second signal sent by the second device, and the first device performs sensing measurement based on the first signal and the second signal. In this way, sensing measurement is performed based on the received first signal and second signal, and it is not necessary to use the change of multipath signals to implement measurement of sensing quantity, thereby reducing interference of unrelated multipaths on sensing signals in a multipath environment and reducing measurement errors.

Optionally, after the performing, by the first device, sensing measurement based on the first signal and the second signal, the method further includes:

obtaining a measurement result of the second signal relative to the first signal; where
the measurement result includes at least one of the following:

> a delay difference;
> a frequency difference;
> a phase difference;
> a power difference;
> an angle difference; and
> a channel correlation.

The delay difference may be a delay difference of the second signal relative to the first signal; or may be a time difference for the second signal arriving at the first device relative to the first signal. For example, the delay difference may be a difference between the delay of the second signal and the delay of the first signal. The delay may be a difference between a time point at which the signal arrives at the first device and the time point at which the signal is sent from the second device. In an implementation, the delay of the first signal may be a delay corresponding to the 1st path with path signal quality exceeding a predefined threshold or a path with the strongest path signal quality in the first signal. The delay of the second signal may be a delay corresponding to the 1st path with path signal quality exceeding a predefined threshold or a path with the strongest path signal quality in the second signal.

In addition, the frequency difference may be a frequency difference of the second signal relative to the first signal, and for example, the frequency difference may be a difference between the frequency of the second signal and the frequency of the first signal. In an implementation, the frequency of the first signal may be a frequency corresponding to the 1st path with path signal quality exceeding a predefined threshold or a path with the strongest path signal quality in the first signal. The frequency of the second signal may be a frequency corresponding to the 1st path with path signal quality exceeding a predefined threshold or a path with the strongest path signal quality in the second signal.

In addition, the phase difference may be a phase difference of the second signal relative to the first signal, and for example, the phase difference may be a difference between the phase of the second signal and the phase of the first signal. In an implementation, the phase of the first signal may be a phase corresponding to the 1st path with path signal quality exceeding a predefined threshold or a path with the strongest path signal quality in the first signal. The phase of the second signal may be a phase corresponding to the 1st path with path signal quality exceeding a predefined threshold or a path with the strongest path signal quality in the second signal.

In addition, the power difference may be a power difference of the second signal relative to the first signal, and for example, the power difference may be a difference between the power of the second signal and the power of the first signal. In an implementation, the power of the first signal may be a power corresponding to the 1st path with path signal quality exceeding a predefined threshold or a path with the strongest path signal quality in the first signal. The power of the second signal may be a power corresponding to the 1st path with path signal quality exceeding a predefined threshold or a path with the strongest path signal quality in the second signal.

In addition, the angle difference may be an angle difference of the second signal relative to the first signal, and for example, the angle difference may be a difference between the angle of the second signal and the angle of the first signal. In an implementation, the angle of the first signal may be an angle corresponding to the 1st path with path signal quality exceeding a predefined threshold or a path with the strongest path signal quality in the first signal. The angle of the second signal may be an angle corresponding to the 1st path with path signal quality exceeding a predefined threshold or a path with the strongest path signal quality in the second signal.

In addition, the channel correlation may be a channel correlation between the second signal and the first signal.

Optionally, the first device is a terminal and the second device is a network-side device, and after the obtaining a measurement result of the second signal relative to the first signal, the method further includes:
sending, by the first device, the measurement result to the second device.

In this embodiment, the first device sends the measurement result to the second device, so that the terminal reports the measurement result of the sensing measurement to the network-side device after completing the sensing measurement.

Optionally, the first device is a terminal and the second device is a network-side device, and before the receiving, by a first device, a first signal and a second signal that are sent by a second device, the method further includes:
receiving, by the first device, first configuration information sent by the second device, where the first configuration information includes at least one of the following:

> a time-frequency resource for the first signal and/or the second signal;
> a transmission period of the first signal and/or the second signal;
> a port number of the first signal and/or the second signal;
> a random sequence generation parameter of the first signal and/or the second signal;
> beam indication information of the first signal and/or the second signal;
> first indication information for indicating a sensing measurement mode;
> second indication information for indicating a type of the measurement result; and
> third indication information for indicating a reporting resource for reporting information.

The time-frequency resource for the first signal and/or the second signal may include a starting transmission time of the first signal and/or the second signal, and a starting time of the sensing service may be determined based on the starting transmission time of the first signal and/or the second signal.

In an implementation, the first signal may be a reference signal of a reference beam for sensing measurement, and the network-side device configures a parameter of the reference signal of the reference beam for the terminal. The reference signal of the reference beam may be a downlink reference signal such as CSI-RS, synchronization signal block (Synchronization Signal Block, SSB), DMRS, or PRS. The network-side device configures the terminal with the time-frequency resources, transmission period and port number of the downlink reference signal.

In an implementation, the second signal may be a reference signal of the sensing beam for sensing measurement, and the network-side device configures a parameter of the reference signal of the sensing beam for the terminal. The reference signal of the reference beam may be a downlink reference signal such as CSI-RS, SSB, DMRS, or PRS. The network-side device configures the terminal with the time-frequency resources, transmission period and port number of the downlink reference signal.

It should be noted that the network-side device may update the sensing beam for the terminal. The network-side device configures a new sensing beam port or TCI information, and informs the terminal to update the sensing beam.

In an implementation, the first configuration information may include first indication information for indicating a sensing measurement mode. The network-side device indicates a sensing measurement mode of the terminal, and the sensing measurement mode may be single-beam measurement or multi-beam measurement. Explicitly, the network-side device indicates the terminal to use multi-beam measurement or single-beam measurement. Implicitly, the terminal determines the sensing measurement mode according to whether the network-side device configures the reference signal of sensing beam, so as to use multi-beam measurement when the network-side device configures a reference signal of sensing beam, and use single-beam measurement when the network-side device configures no reference signal of sensing beam.

In an implementation, the first configuration information may include second indication information for indicating a type of the measurement result. The network-side device indicates a measurement result for the sensing measurement of the terminal. For example, the measurement result is a Doppler shift, a frequency difference, a delay difference, or the like, where the measurement result may be a Doppler shift in a case of single-beam measurement, and the measurement result may be a frequency difference in a case of multi-beam measurement.

In an implementation, the first configuration information may include third indication information for indicating a reporting resource for reporting information. The network-side device configures the reporting resource for reporting information, and a configuration mode of the reporting resource for reporting information may still use the method of related protocols.

It should be noted that the network-side device may configure an SRS resource for the terminal. The network-side device may configure two SRS resources for the terminal, which are respectively associated with the reference beam and the sensing beam for sensing measurement, or the network-side device may specify to determine the reference beam and the sensing beam during sensing beam training, or use a default beam, that is, using a beam associated with a current physical uplink shared channel (Physical Uplink Shared Channel, PUSCH) as the reference beam and the sensing beam. The network-side device may select a receive beam and a sensing measurement mode according to a current channel status.

In the multi-point distributed sensing deployment scenario in the integration of communication and sensing (communication-sensing integration), radio signals are sent in a form of broadcasting (or a single wide beam). In complex wireless environment (such as outdoors and factory), multipath propagation may affect a channel estimation result of a received signal, leading to decline of sensing accuracy. In addition, when the network-side device needs to sense multiple targets, the broadcast radio signal will cause information of multiple targets to be mixed together, which increases signal processing complexity of the terminal. In this embodiment, introduction of the beam-based sensing parameter configuration can improve energy utilization efficiency of the sensing signal and can also support the multi-target sensing function.

Optionally, the first device is a network-side device and the second device is a terminal, and before the receiving, by a first device, a first signal and a second signal that are sent by a second device, the method further includes:

sending, by the first device, second configuration information to the second device, where the second configuration information includes at least one of the following:

a time-frequency resource for the first signal and/or the second signal;
a transmission period of the first signal and/or the second signal;
a port number of the first signal and/or the second signal;
beam indication information of the first signal and/or the second signal;
a random sequence generation parameter of the first signal and/or the second signal; and
a transmission power of the first signal and/or the second signal.

The time-frequency resource for the first signal and/or the second signal may include a starting transmission time of the first signal and/or the second signal, and a starting time of the sensing service may be determined based on the starting transmission time of the first signal and/or the second signal.

In addition, the network-side device may configure a parameter of the first signal and/or the second signal for the terminal through the second configuration information. The beam indication information of the first signal and/or the second signal may include an SRS resource indicator (SRS resource indicator, SRI).

In this embodiment, introduction of the beam-based sensing parameter configuration can improve energy utilization efficiency of the sensing signal and can also support the multi-target sensing function.

Optionally, the first configuration information or the second configuration information is carried by at least one of radio resource control (Radio Resource Control, RRC) signaling, media access control (Media access control, MAC) control element (Control Element, CE) signaling, and downlink control information (Downlink Control Information, DCI) signaling.

In an implementation, the first configuration information may be carried by at least one of radio resource control RRC signaling, media access control MAC control element CE signaling, and downlink control information DCI signaling. The terminal is indicated by DCI or MAC CE signaling to start or end the sensing measurement process.

In an implementation, the second configuration information may be carried by at least one of radio resource control RRC signaling, media access control MAC control element CE signaling, and downlink control information DCI signaling.

Optionally, the first signal and the second signal are frequency division multiplexed; or

the first signal and the second signal are time division multiplexed; or
the first signal and the second signal are code division multiplexed.

In an implementation, the first signal may be a reference signal of a reference beam for sensing measurement, and the second signal may be a reference signal of a sensing beam for sensing measurement, where the reference signal of the sensing beam may be multiplexed with the reference signal of the reference beam in a code division, time division or frequency division manner. When a parameter of the first signal or the second signal is default, a configuration parameter of the other signal may be used based on a multiplexing relationship. Using code division multiplexing as an example, the reference signal of the sensing beam multiplexes a time-frequency resource for the reference signal of the reference beam. The network-side device configures a code division multiplexing (Code division multiplexing, CDM) parameter for the reference signal of the sensing beam different from that for the reference signal of the reference beam.

In addition, when the first signal and the second signal are time division multiplexed or code division multiplexed, transmission periods and time-frequency configuration parameters of the first signal and the second signal may be the same. In time division multiplexing, the transmission periods may be the same, the frequency resource configuration parameters may be the same, and a time domain resource configuration parameter may be determined based on an offset, where the offset may be at the symbol level or the slot level.

In this implementation, the first signal and the second signal are frequency division multiplexed; or the first signal and the second signal are time division multiplexed; or the first signal and the second signal are code division multiplexed. In this way, multiplexing of signal configuration parameters can be implemented and the configuration complexity can be reduced.

Optionally, a beam of the first signal is a reference beam for sensing measurement, and the beam of the first signal satisfies a first condition, where the first condition is that a ratio of a signal energy of a transmission path between the first device and the second device to a total energy of a received signal is greater than a first preset threshold;
and/or
a beam of the second signal is a sensing beam for sensing measurement, and the beam of the second signal meets a second condition, where the second condition is that a transmission path passing through a sensing area is present between the first device and the second device, and a ratio of a signal energy of the transmission path passing through the sensing area to a total energy of a received signal is greater than a second preset threshold.

The sensing area may be an area where the sensing object is located or an area to be sensed. In an implementation, the first condition may be that a stable transmission path is present between the first device and the second device, and a ratio of a signal energy of the stable transmission path to the total energy of the received signal is greater than a first preset threshold. The stable transmission path indicates that a channel response correlation of a channel response corresponding to the transmission path in a time period is greater than a predefined threshold.

In an implementation, the beam of the first signal meeting a first condition may be that in a case of transmission using the beam of the first signal, the ratio of the signal energy of the transmission path between the first device and the second device to the total energy of the received signal is greater than the first preset threshold.

In an implementation, the beam of the second signal meeting the second condition may be that in a case of transmission using the beam of the second signal, a transmission path passing through a sensing area is present between the first device and the second device, and a ratio of a signal energy of the transmission path passing through the sensing area to a total energy of a received signal is greater than a second preset threshold.

In this implementation, synchronization between the terminal and the network-side device may be ensured by configuring the reference beam for sensing measurement, and complexity of the sensing measurement of the terminal is reduced.

Optionally, after the receiving, by a first device, a first signal and a second signal that are sent by a second device, the method further includes:

determining, from the first signal and the second signal in a target determining manner, a signal corresponding to a reference beam for sensing measurement and a signal corresponding to a sensing beam for sensing measurement; where
the target determining manner is determined based on an explicit indication; or
the target determining manner is determined according to a configuration order in the first configuration information or the second configuration information.

In an implementation, the beam of the first signal and the beam of the second signal may be determined according to a beam configuration sequence in the first configuration information, for example, the beam configured first may be the beam of the first signal, and the beam configured later may be the beam of the second signal; or the first signal and the second signal are configured by defining different signaling.

In an implementation, the beam of the first signal and the beam of the second signal may be determined according to a beam configuration sequence in the second configuration information, for example, the beam configured first may be the beam of the first signal, and the beam configured later may be the beam of the second signal.

1It should be noted that in the case that the first device is a network-side device and the second device is a terminal, the terminal does not need to distinguish the beam of the first signal from the beam of the second signal, and the network-side device may perform processing automatically.

Optionally, the method further includes:
determining, by the first device, a beam of the first signal as a reference beam for data communication, where a physical channel used by the data communication includes at least one of the following:

a physical downlink control channel (Physical downlink control channel, PDCCH) for reception;
a physical downlink shared channel (Physical downlink shared channel, PDSCH) for reception;
a physical uplink control channel (Physical Uplink Control Channel, PUCCH) for transmission; and
a physical uplink shared channel (Physical Uplink Shared Channel, PUSCH) for transmission.

The PUCCH and the PUSCH may include data channels for reporting measurement results.

In an implementation, the second device may alternatively determine the beam of the first signal as a reference beam for data communication. The first device and the second device determine the beam of the first signal as a reference beam for data communication.

Optionally, the method further includes at least one of the following:

performing, by the first device, radio frame synchronization based on the first signal; and
performing, by the first device, frequency synchronization based on the first signal.

The first device may be a terminal, and the first signal may be the reference signal of the reference beam for sensing measurement, and the terminal performs radio frame synchronization and/or frequency synchronization with the reference signal of the reference beam. The adjustment time of radio frame synchronization and frequency synchronization may be before receiving of the reference signal of the reference beam for a next time or after receiving of the reference signal of the sensing beam for sensing measurement.

Optionally, before the receiving, by a first device, a first signal and a second signal that are sent by a second device, the method further includes:

performing, by the first device, a target operation; where
the target operation includes at least one of the following:

receiving, by the first device, a third signal sent by the second device, where the third signal is used for determining channel state information meeting the first condition; and
receiving, by the first device, a fourth signal sent by the second device, where the fourth signal is used for determining channel state information meeting the second condition.

The channel state information meeting the first condition may include a signal strength of the signal meeting the first condition and/or a channel correlation between the signal meeting the first condition and the signal meeting the second condition. The channel state information meeting the second condition may include a signal strength of the signal meeting the second condition and/or a channel correlation between the signal meeting the first condition and the signal meeting the second condition.

It should be noted that the network-side device may obtain a channel state of the terminal in a cell by using the third signal and/or the fourth signal, and determine whether the channel is a direct path line-of-sight, or an LOS channel, or a channel with stable amplitude and phase.

In an implementation, the first device may be a terminal, the second device may be a network-side device, the third signal and/or the fourth signal may be a downlink reference signal, the third signal and/or the fourth signal may be a reference signal for channel measurement, and channel state information meeting the first condition and/or the second condition may be determined through channel measurement. The third signal and/or the fourth signal may be a downlink reference signal explicitly configured by the network-side device, for example, a CSI-RS, a PRS, or a reference signal dedicated to the sensing service. The configuration parameter of the downlink reference signal, such as a time-frequency resource, a period, and a random sequence generation parameter, may follow a configuration mode in related protocols, is not limited in this embodiment. Alternatively, the downlink reference signal for channel measurement, such as an SSB or a DMRS, may be determined according to a default rule. For example, the downlink reference signal may be an SSB, where the SSB is an SSB with the largest SS reference signal received power (SS reference signal received power, SS-RSRP) in an SSB set. The SS is a synchronization signal, and the SS-RSRP may be the latest SS-RSRP measurement result or an SS-RSRP result obtained through L1 filtering; or the downlink reference signal may be a DMRS, and correspondingly, a bandwidth of PDSCH received by the terminal is greater than a threshold. The network-side device may configure third configuration information for the terminal, indicating the terminal to perform channel measurement and determine whether it is an LOS channel.

It should be noted that the measurement result of channel measurement by the terminal may be reported periodically, or the reporting may be triggered by the configuration information of the network-side device. Optionally, the terminal reports the measurement result of channel measurement only when the channel state is a LOS channel after channel measurement. In addition, the judgment algorithm for the LOS channel may be implemented based on terminal hardware.

In addition, the beam of the third signal may be a reference beam for channel measurement, and the beam of the fourth signal may be a sensing beam for channel measurement. The terminal may perform measurement on the sensing beam and report the measurement result of the sensing beam. The network-side device may determine, based on the measurement result of the sensing beam reported by the terminal, whether the terminal can receive the sensing beam and a correlation between the channel of the sensing beam and the LOS channel.

In addition, the network-side device may determine the sensing beam for channel measurement, and the sensing beam may be selected from a predefined candidate beam set for network deployment. The network deployment may include an actual environment of the cell, positions of objects in the cell, and so on; or may be determined through beam scanning; or may be determined according to a sensing requirement, for example, the sensing requirement may include sensing objects in a specific direction or a specific area.

In addition, the network-side device may configure parameters of the sensing beam for channel measurement for the terminal, including a time-frequency resource corresponding to the downlink reference signal of the sensing beam, a port number, a random sequence of the reference signal, and a reporting resource required for the measurement result. The downlink reference signal may be a CSI-RS, a DMRS, or a PRS. The terminal receives a downlink reference signal corresponding to the sensing beam and obtains a measurement result of channel measurement, for example, the measurement result of the channel measurement may be a signal quality of the downlink reference signal corresponding to the sensing beam, and/or a CSI reference signal received power (CSI reference signal received power, CSI-RSRP) and/or a CSI reference signal received quality (CSI reference signal received quality, CSI-RSRQ); or the measurement result of the channel measurement may be a difference between the signal quality of the downlink reference signal corresponding to the sensing beam and a signal quality of the downlink reference signal corresponding to LOS channel measurement, or a correlation between a channel of the downlink reference signal corresponding to the sensing beam and a channel of the downlink reference signal corresponding to the LOS channel measurement.

In addition, the terminal may perform LOS channel measurement based on the third signal and perform measurement based on the sensing beam based on the fourth signal. It can be understood that the measurement of the sensing beam and the LOS channel measurement may be performed concurrently. For example, the network-side device schedules the terminal to send an uplink signal, where the uplink signal may be an SRS or a DMRS, and the network-side device determines, based on the uplink signal, whether the terminal determines whether there is an LOS signal and senses the channel quality between the sensing beam and the terminal according to the uplink signal. For example, the network-side device sends the downlink reference signal for LOS channel measurement and the downlink reference signal of the sensing beam separately, and the terminal performs measurement on the two downlink reference signals and feeds back a measurement result of the LOS channel and a measurement result of the sensing beam.

In an implementation, the first device may be a network-side device, the second device may be a terminal, the third signal and/or the fourth signal may be an uplink reference signal, the third signal and/or the fourth signal may be a reference signal for channel measurement, and channel state information meeting the first condition and/or the second condition may be determined through channel measurement. The network-side device may configure for the terminal a third signal and/or a fourth signal, such as an SRS or a DMRS. The terminal may send an uplink reference signal based on the third signal and/or the fourth signal configured by the network-side device, and the network-side device determines, based on the received uplink reference signal, whether the channel from the terminal to the network-side device is an LOS channel. The third signal and/or the fourth signal may be an uplink reference signal explicitly configured by the network-side device for the terminal, for example, an SRS; or an uplink reference signal implicitly configured, such as a DMRS. The network-side device may schedule one or more terminals through configuration information to send uplink reference signals, where the configuration information indicates a time-frequency resource for the uplink reference signal, an orthogonal sequence of the reference signal, and an uplink beam.

It should be noted that determining of the uplink beam may be explicitly indicating that characteristics (spatial domain filter) of the uplink transmit beam correspond to a receive beam of a specific downlink reference signal (for example, SSB or CSI-RS), or implicitly using an uplink beam of a current PUSCH. In addition, the network-side device may schedule the terminal to send a PUSCH, and detect a DMRS to determine whether the channel from the network-side device to the terminal is an LOS channel. The PUSCH may be data information of one fixed payload (payload) fixed modulation and coding scheme (Modulation and coding scheme, MCS).

It should be noted that the first device may be a network-side device, and the second device may be a terminal. The network-side device may receive a third signal sent by the terminal to determine the channel state information meeting the first condition, and receive a fourth signal sent by the terminal to determine the channel state information meeting the second condition. For example, the network-side device may receive third signals and/or fourth signals sent by a plurality of terminals, and determine ae terminal corresponding to the channel state information meeting the first condition and/or the channel state information meeting the second condition as a selected terminal.

In an implementation, the network-side device schedules the terminals in a coverage to send uplink signals, and selects a terminal that meets the condition according to the receiving results of the uplink signals. The terminal that meets the condition has an LOS path, and there is a path from the network-side device to the sensing object to the terminal, where the path reaches a specific signal strength. The process of selecting a terminal by the network-side device may be as follows:

(1) The network-side device determines whether the terminal has an LOS path, or whether a main path between the network-side device and the terminal is stable. The main path refers to one or several paths with a strongest energy in a time domain response of the channel, and a ratio of the energy of the main path to the total energy exceeds a predefined threshold. Whether it is stable is defined as whether the main path remains unchanged or whether the energy ratio is stable or whether the frequency is stable.

The third signal and the fourth signal may be uplink signals. The network-side device may schedule the terminal to send the uplink signal so as to determine the channel state information, and the third signal and/or the fourth signal may be an SRS, a DMRS, or a reference signal dedicated to the sensing service. The transmit beam (spatial domain filter (spatial domain filter)) of the third signal and/or the fourth signal may be determined according to a default rule. For example, based on a measurement and monitoring result of a downlink synchronization signal, a receive beam of an SSB with the strongest signal energy is selected as a transmit beam of the uplink signal; or the transmit beam of the third signal and/or the fourth signal may be determined based on a beam training result; or the transmit beam of the third signal and/or the fourth signal may be indicated by the network-side device, for example, the uplink beam is explicitly indicated by SRI; or the network-side device may designate an SSB, and the terminal uses a receive beam of the designated SSB as the transmit beam of the uplink signal; and so on. This embodiment does not constitute a limitation on a manner of determining the transmit beam of the third signal and/or the fourth signal.

(2) Determine whether a radio path from the network-side device to the sensing target to the terminal meets the second condition. The network-side device may schedule the terminal to send an uplink signal to determine whether the radio path from the network-side device to the sensing target to the terminal meets the second condition, and the uplink signal may be an SRS, a DMRS, or a reference signal dedicated to the sensing service.

It can be understood that the above two steps may be performed simultaneously. For example, the network-side device configures the terminal to perform uplink beam scanning, which includes the reference beam and the sensing beam for measurement. The network-side device selects a reference beam and a sensing beam from scanned beams.

It should be noted that the network-side device may receive the third signal and the fourth signal, and based on the third signal and the fourth signal, determine a sensing measurement mode, determine a receive beam of the reference beam and a receive beam of the sensing beam, and determine information about the uplink signal of the reference beam and the uplink signal of the sensing beam.

Optionally, the third signal and/or the fourth signal are further used for determining a sensing measurement mode; where

in a case that the sensing measurement mode is single-beam measurement, a transmit beam of the first signal is the same as a transmit beam of the second signal; or
in a case that the sensing measurement mode is multi-beam measurement, the transmit beam of the first signal is different from the transmit beam of the second signal.

In a case of multi-beam measurement, reference beams of multiple sensing measurements may be associated with a same reference beam in a shared way.

In an implementation, the beam of the third signal may be a reference beam for channel measurement, and a measurement result of the LOS channel may be obtained based on the third signal. The beam of the fourth signal may be a sensing beam of channel measurement, and a channel measurement result of the sensing beam may be obtained based on the fourth signal. Based on the channel measurement result of the sensing beam and the measurement result of the LOS channel, the network-side device may determine to configure, for the terminal, the sensing measurement mode of single-beam measurement or the sensing measurement mode of multi-beam measurement. Different configurations make the terminal use different sensing measurement modes. For example, the network-side device may determine the sensing measurement mode based on the correlation between the channel measurement result of the sensing beam and the measurement result of the LOS channel, and use the sensing measurement mode of single-beam measurement when the correlation is greater than the predefined threshold or use the sensing measurement mode of multi-beam measurement when the correlation is lower than the predefined threshold; or the network-side device may determine the strongest path in the channel measurement result of the sensing beam and the strongest path or a first path in the measurement result of the LOS channel, and determine the sensing measurement mode based on a difference between channel parameters for channel measurement of the two paths. The channel parameter may include at least one of delay, angle, and Doppler frequency. For example, if a time difference between delays of the two paths is less than a predefined threshold, the sensing measurement mode of single-beam measurement is used; or if the time difference between the delays of the two paths is greater than or equal to the predefined threshold, the sensing measurement mode of multi-beam measurement is used.

In this implementation, the sensing measurement mode is determined based on the third signal and/or the fourth signal, so that the sensing measurement mode can be determined based on the channel state, so as to support the network-side device to configure the sensing measurement mode for the terminal.

Optionally, the first device is a terminal and the second device is a network-side device, and after the performing, by the first device, a target operation, the method further includes:

sending, by the first device, the channel state information to the second device; where
the channel state information includes at least one of the following:

a signal strength of a signal meeting the first condition;
a signal strength of a signal meeting the second condition; and
channel correlation between the signal meeting the first condition and the signal meeting the second condition.

The signal meeting the first condition may be that in a case of transmission using the beam of the signal, the ratio of the signal energy of the transmission path between the first device and the second device to the total energy of the received signal is greater than the first preset threshold. The signal meeting the second condition may be that in a case of transmission using the beam of the signal, a transmission path passing through a sensing area is present between the first device and the second device, and a ratio of a signal energy of the transmission path passing through the sensing area to a total energy of a received signal is greater than a second preset threshold.

In this implementation, the first device sends the channel state information to the second device, so that the network-side device may determine, based on the channel state information reported by the terminal, whether the terminal meets a condition of being a terminal for sensing measurement.

Optionally, the first device is a terminal and the second device is a network-side device, and before the receiving, by a first device, a first signal and a second signal that are sent by a second device, the method further includes at least one of the following:

performing, by the first device, beam training or codebook feedback, so that a beam energy of the first signal is concentrated on a transmission channel meeting the first condition; and
performing, by the first device, beam training or codebook feedback, so that a beam energy of the second signal is concentrated on a transmission channel meeting the second condition.

In an implementation, the network-side device schedules terminals within the coverage area to send uplink reference signals, and the network-side device selects a terminal meeting a condition based on the measurement result of the uplink reference signal sent by the terminal, where the terminal meeting the condition may be a terminal corresponding to the channel state information meeting the first condition and/or the second condition. The network-side device configures a beam training or beamforming measurement process for the terminal meeting the condition, and the terminal performs beam training or codebook feedback, so that the beam energy of the first signal is concentrated on the transmission channel meeting the first condition; and/or

the network-side device configures a beam training or beamforming measurement process for the terminal meeting the condition, and the terminal performs beam training or codebook feedback, so that the beam energy of the second signal is concentrated on the transmission channel meeting the second condition.

In an implementation, the network-side device sends a downlink reference signal to the terminals within the coverage area, and the terminal performs channel measurement based on the downlink reference signal sent by the network-side device, and reports a measurement result of the channel measurement. The network-side device selects a terminal meeting the condition based on the measurement result reported by the terminal, and the terminal meeting the condition may be a terminal corresponding to the channel state information that meets the first condition and/or the second condition. The network-side device configures a beam training or beamforming measurement process for the terminal meeting the condition, and the terminal performs beam training or codebook feedback, so that the beam energy of the first signal is concentrated on the transmission channel meeting the first condition; and/or

the network-side device configures a beam training or beamforming measurement process for the terminal meeting the condition, and the terminal performs beam training or codebook feedback, so that the beam energy of the second signal is concentrated on the transmission channel meeting the second condition.

In this implementation, the first device performs beam training or codebook feedback, so that the beam energy of the first signal is concentrated on the transmission channel meeting the first condition; and/or the first device performs beam training or codebook feedback, so that the beam energy of the second signal is concentrated on the transmission channel meeting the second condition. In this way, the signal energy may be concentrated on the sensing target through beam training or codebook feedback, thereby improving a reflected signal energy of the sensing target.

Optionally, the first signal and the second signal use different receive beams;
or

the first signal and the second signal are received using a broadcast beam;
or
the first signal and the second signal use a same receive beam.

In an implementation, the first device may be a terminal, and the second device may be a network-side device. The first signal may be a reference signal of the reference beam for sensing measurement, and the second signal may be a reference signal of the sensing beam for sensing measurement. The base station may configure a beam training or beamforming process for the terminal so as to determine a receive beam (for example, a spatial domain receive filter (spatial domain receive filter)) for receiving the sensing beam by the terminal. According to specification of the protocol or terminal hardware capabilities, the following three configurations may be included:

(1) The first signal and the second signal use different receive beams. In this way, beam training is performed separately on the beam of the first signal and the beam of the second signal to determine a corresponding receive beam.

(2) The first signal and the second signal are received using a broadcast beam. For a single-antenna terminal or a terminal with limited radio frequency hardware (for example, switching of the receive beam cannot be completed in a short time), the broadcast beam may be used for receiving the beam of the first signal and the beam of the second signal.

(3) The first signal and the second signal use a same receive beam. The terminal may receive downlink reference signals of the beam of the first signal and the beam of the second signal during beam training, and determine a same receive beam.

The following describes the sensing measurement method of the embodiments of this application by using two specific embodiments.

Embodiment 1:

Using the first device being a terminal and the second device being a network-side device as an example, the first signal may be a reference signal of the reference beam for sensing measurement, the second signal may be a reference signal of the sensing beam for sensing measurement, and sensing measurement is implemented through downlink signals. The sensing measurement method may include the following processes:

(1) The network-side device selects a terminal in the cell, and the selected terminal is used for sensing measurement for a sensing target (for example, an object, a building or a human body in the coverage area of the cell).

The network-side device obtains a channel state of the terminal in the cell and determines whether the channel is a direct path line-of-sight, a LOS channel, or a channel with stable amplitude and phase. It can be understood that the base station schedules one or more terminals based on capabilities reported by the terminals to perform corresponding channel state measurement and reporting and subsequent sensing measurement operations.

The network-side device determines a terminal meeting a condition according to an obtained channel state of the terminal, and the terminal meeting the condition performs measurement on the sensing beam and reports a measurement result of the sensing beam, so that the network-side device determines whether the terminal meeting the condition can receive the sensing beam, and a correlation between the channel of the sensing beam and the LOS channel.

(2) The network-side device configures first configuration information for the selected terminal.

(3) The terminal receives, according to the first configuration information, the first signal and the second signal sent by the network-side device, performs sensing measurement based on the first signal and the second signal, and feeds back a measurement result of the sensing measurement to the network-side device.

Embodiment 2:

Using the first device being a network-side device and the second device being a terminal as an example, the first signal may be a reference signal of the reference beam for sensing measurement, the second signal may be a reference signal of the sensing beam for sensing measurement, and sensing measurement is implemented through uplink signals. The sensing measurement method may include the following processes:

(1) The network-side device schedules the terminals in a coverage to send uplink signals, and selects a terminal that meets the condition according to the receiving results of the uplink signals. The terminal that meets the condition has an LOS path, and there is a path from the network-side device to the sensing object to the terminal, where the path reaches a specific signal strength.
(2) The network-side device configures second configuration information for the selected terminal.
(3) The network-side device receives a first signal and a second signal that are sent by the terminal, and the network-side device performs sensing measurement based on the first signal and the second signal, where the first signal and the second signal are sent by the terminal based on the second configuration information.

It should be noted that the scheme of implementing sensing measurement using downlink signals in Embodiment 1 may be combined with the scheme of implementing sensing measurement using uplink signals in Embodiment 2, so that the network-side device configures uplink signals and downlink signals alternately to implement measurement of the sensing service, and the terminal and the network-side device may perform sensing measurement separately.

Referring to FIG. 10, FIG. 10 is a flowchart of a sensing measurement method according to an embodiment of this application. As shown in FIG. 10, the sensing measurement method includes the following steps.

Step 201: A second device sends a first signal and a second signal to a first device.

The first signal and the second signal are used by the first device to perform sensing measurement.

Optionally, the first signal and the second signal are used for the first device to perform sensing measurement to obtain a measurement result of the second signal relative to the first signal; and

the measurement result includes at least one of the following:

a delay difference;
a frequency difference;
a phase difference;
a power difference;
an angle difference; and
a channel correlation.

Optionally, the first device is a terminal and the second device is a network-side device, and after the sending, by a second device, a first signal and a second signal to a first device, the method further includes:
receiving, by the second device, the measurement result sent by the first device.

Optionally, the first device is a terminal and the second device is a network-side device, and before the sending, by a second device, a first signal and a second signal to a first device, the method further includes:
sending, by the second device, first configuration information to the first device, where the first configuration information includes at least one of the following:

a time-frequency resource for the first signal and/or the second signal;
a transmission period of the first signal and/or the second signal;
a port number of the first signal and/or the second signal;
a random sequence generation parameter of the first signal and/or the second signal;
beam indication information of the first signal and/or the second signal;
first indication information for indicating a sensing measurement mode;
second indication information for indicating a type of the measurement result; and
third indication information for indicating a reporting resource for reporting information.

Optionally, the first device is a network-side device and the second device is a terminal, and before the sending, by a second device, a first signal and a second signal to a first device, the method further includes:

receiving, by the second device, second configuration information sent by the first device, where the second configuration information includes at least one of the following:

> a time-frequency resource for the first signal and/or the second signal;
> a transmission period of the first signal and/or the second signal;
> a port number of the first signal and/or the second signal;
> beam indication information of the first signal and/or the second signal;
> a random sequence generation parameter of the first signal and/or the second signal; and
> a transmission power of the first signal and/or the second signal.

It should be noted that this embodiment is an implementation of a second device corresponding to the embodiment shown in FIG. 5. For the specific implementation, reference may be made to the related description of the embodiment shown in FIG. 5. To avoid repeated descriptions, details are not repeated in this embodiment. In this way, sensing measurement is performed based on the received first signal and second signal, and it is not necessary to use the change of multipath signals to implement measurement of sensing quantity, thereby reducing interference of unrelated multipaths on sensing signals in a multipath environment and reducing measurement errors.

In the sensing measurement method provided in the embodiments of this application, the execution subject may be a sensing measurement apparatus. In the embodiments of this application, the sensing measurement method being performed by the sensing measurement apparatus is used as an example to describe the sensing measurement apparatus provided in the embodiments of this application.

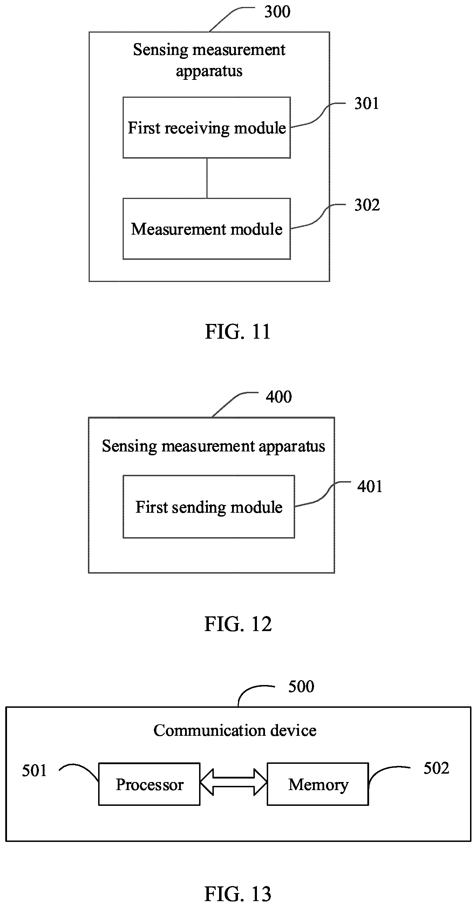

Referring to FIG. 11, FIG. 11 is a structural diagram of a sensing measurement apparatus according to an embodiment of this application. A first device includes the sensing measurement apparatus, and as shown in FIG. 11, the sensing measurement apparatus 300 includes:

> a first receiving module 301, configured to receive a first signal and a second signal that are sent by a second device; and
> a measurement module 302, configured to perform sensing measurement based on the first signal and the second signal.

Optionally, the apparatus further includes:

an obtaining module, configured to obtain a measurement result of the second signal relative to the first signal; where
the measurement result includes at least one of the following:

> a delay difference;
> a frequency difference;
> a phase difference;
> a power difference;
> an angle difference; and
> a channel correlation.

Optionally, the first device is a terminal and the second device is a network-side device, and the apparatus further includes:
a first sending module, configured to send the measurement result to the second device.

Optionally, the first device is a terminal and the second device is a network-side device, and the apparatus further includes:
a second receiving module, configured to receive first configuration information sent by the second device, where the first configuration information includes at least one of the following:

> a time-frequency resource for the first signal and/or the second signal;
> a transmission period of the first signal and/or the second signal;
> a port number of the first signal and/or the second signal;
> a random sequence generation parameter of the first signal and/or the second signal;
> beam indication information of the first signal and/or the second signal;
> first indication information for indicating a sensing measurement mode;
> second indication information for indicating a type of the measurement result; and
> third indication information for indicating a reporting resource for reporting information.

Optionally, the first device is a network-side device and the second device is a terminal, and the apparatus further includes:
a second sending module, configured to send second configuration information to the second device, where the second configuration information includes at least one of the following:

> a time-frequency resource for the first signal and/or the second signal;
> a transmission period of the first signal and/or the second signal;
a port number of the first signal and/or the second signal;
beam indication information of the first signal and/or the second signal;
a random sequence generation parameter of the first signal and/or the second signal; and
a transmission power of the first signal and/or the second signal.

Optionally, the first configuration information or the second configuration information may be carried by at least one of radio resource control RRC signaling, media access control MAC control element CE signaling, and downlink control information DCI signaling.

Optionally, the first signal and the second signal are frequency division multiplexed; or

the first signal and the second signal are time division multiplexed; or
the first signal and the second signal are code division multiplexed.

Optionally, a beam of the first signal is a reference beam for sensing measurement, and the beam of the first signal satisfies a first condition, where the first condition is that a ratio of a signal energy of a transmission path between the first device and the second device to a total energy of a received signal is greater than a first preset threshold;
and/or
a beam of the second signal is a sensing beam for sensing measurement, and the beam of the second signal meets a second condition, where the second condition is that a transmission path passing through a sensing area is present between the first device and the second device, and a ratio of a signal energy of the transmission path passing through the sensing area to a total energy of a received signal is greater than a second preset threshold.

Optionally, the apparatus further includes:

a first determining module, configured to: determine, from the first signal and the second signal in a target determining manner, a signal corresponding to a reference beam for sensing measurement and a signal corresponding to a sensing beam for sensing measurement; where
the target determining manner is determined based on an explicit indication; or
the target determining manner is determined according to a configuration order in the first configuration information or the second configuration information.

Optionally, the apparatus further includes:
a second determining module, configured to: determine a beam of the first signal as a reference beam for data communication, where a physical channel used by the data communication includes at least one of the following:

a physical downlink control channel PDCCH for reception;
a physical downlink shared channel PDSCH for reception;
a physical uplink control channel PUCCH for transmission; and
a physical uplink shared channel PUSCH for transmission.

Optionally, the apparatus further includes at least one of the following:

a first synchronization module, configured to perform radio frame synchronization based on the first signal; and
a second synchronization module, configured to perform frequency synchronization based on the first signal.

Optionally, the apparatus further includes:

an execution module, configured to perform a target operation; where
the target operation includes at least one of the following:

receiving, by the first device, a third signal sent by the second device, where the third signal is used for determining channel state information meeting the first condition; and
receiving, by the first device, a fourth signal sent by the second device, where the fourth signal is used for determining channel state information meeting the second condition.

Optionally, the third signal and/or the fourth signal are further used for determining a sensing measurement mode; where

in a case that the sensing measurement mode is single-beam measurement, a transmit beam of the first signal is the same as a transmit beam of the second signal; or
in a case that the sensing measurement mode is multi-beam measurement, the transmit beam of the first signal is different from the transmit beam of the second signal.

Optionally, the first device is a terminal and the second device is a network-side device, and the apparatus further includes:

a third sending module, configured to send the channel state information to the second device; where
the channel state information includes at least one of the following:

a signal strength of a signal meeting the first condition;

a signal strength of a signal meeting the second condition; and

channel correlation between the signal meeting the first condition and the signal meeting the second condition.

Optionally, the first device is a terminal and the second device is a network-side device, and the apparatus further includes at least one of the following:

a first processing module, configured to perform beam training or codebook feedback, so that a beam energy of the first signal is concentrated on a transmission channel meeting the first condition; and

a second processing module, configured to perform beam training or codebook feedback, so that a beam energy of the second signal is concentrated on a transmission channel meeting the second condition.

Optionally, the first signal and the second signal use different receive beams;
or

the first signal and the second signal are received using a broadcast beam;
or
the first signal and the second signal use a same receive beam.

Referring to FIG. 12, FIG. 12 is a structural diagram of a sensing measurement apparatus according to an embodiment of this application. A second device includes the sensing measurement apparatus, and as shown in FIG. 12, the sensing measurement apparatus 400 includes:

a first sending module 401, configured to send a first signal and a second signal to a first device; where the first signal and the second signal are used by the first device to perform sensing measurement.

Optionally, the first signal and the second signal are used for the first device to perform sensing measurement to obtain a measurement result of the second signal relative to the first signal; and

the measurement result includes at least one of the following:

a delay difference;
a frequency difference;
a phase difference;
a power difference;
an angle difference; and
a channel correlation.

Optionally, the first device is a terminal and the second device is a network-side device, and the apparatus further includes:
a receiving module, configured to receive the measurement result sent by the first device.

Optionally, the first device is a terminal and the second device is a network-side device, and the apparatus further includes:
a second sending module, configured to send first configuration information to the first device, where the first configuration information includes at least one of the following:

a time-frequency resource for the first signal and/or the second signal;

a transmission period of the first signal and/or the second signal;

a port number of the first signal and/or the second signal;

a random sequence generation parameter of the first signal and/or the second signal;

beam indication information of the first signal and/or the second signal;

first indication information for indicating a sensing measurement mode;

second indication information for indicating a type of the measurement result; and

third indication information for indicating a reporting resource for reporting information.

Optionally, the first device is a network-side device and the second device is a terminal, and the apparatus further includes:
a second receiving module, configured to receive second configuration information sent by the first device, where the second configuration information includes at least one of the following:

a time-frequency resource for the first signal and/or the second signal;

a transmission period of the first signal and/or the second signal;

a port number of the first signal and/or the second signal;

beam indication information of the first signal and/or the second signal;

a random sequence generation parameter of the first signal and/or the second signal; and

a transmission power of the first signal and/or the second signal.

According to the sensing measurement apparatus in this embodiment of this application, sensing measurement is performed based on the received first signal and second signal, and it is not necessary to use the change of multipath signals to implement measurement of sensing quantity, thereby reducing interference of unrelated multipaths on sensing signals in a multipath environment and reducing measurement errors.

The sensing measurement apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The sensing measurement apparatus provided in this embodiment of this application is capable of implementing the processes implemented in the method embodiments in FIG. 10, with the same technical effects achieved. To avoid repetition, details are not described herein again.

Optionally, as shown in FIG. 13, an embodiment of this application further provides a communication device 500, including a processor 501 and a memory 502, where a program or instructions capable of running on the processor 501 are stored in the memory 502. For example, when the communication device 500 is a first device and when the program or the instructions are executed by the processor 501, the steps of the foregoing embodiments of the sensing measurement method applied to the first device are implemented, with the same technical effects achieved. When the communication device 500 is a second device and when the program or the instructions are executed by the processor 501, the steps of the foregoing embodiments of the sensing measurement method applied to the second device are implemented, with the same technical effects achieved. To avoid repetition, details are not described herein again.

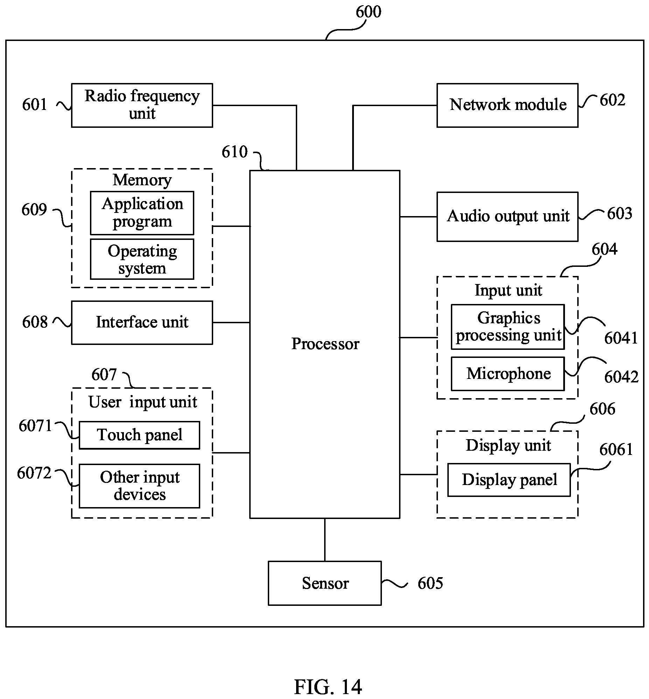

An embodiment of this application further provides a terminal, where the terminal may be a first device, including a processor and a communication interface. The communication interface is configured to receive a first signal and a second signal that are sent by a second device; and the processor is configured to perform sensing measurement based on the first signal and the second signal; or the communication interface is configured to send a first signal and a second signal to a first device; where the first signal and the second signal are used by the first device to perform sensing measurement. The terminal embodiments correspond to the foregoing method embodiments of the first device side or correspond to the foregoing method embodiments of the second device side, and the implementation processes and implementations of the foregoing method embodiments can be applied to the terminal embodiments, with the same technical effects achieved. Specifically, FIG. 14 is a schematic diagram of a hardware structure of a terminal for implementing the embodiments of this application.

The terminal 600 includes but is not limited to at least part of components such as a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power supply (for example, a battery) supplying power to the components, and the power supply may be logically connected to the processor 610 through a power management system. In this way, functions such as charge management, discharge management, and power consumption management are implemented by using the power management system. The structure of the terminal shown in FIG. 14 does not constitute any limitation on the terminal. The terminal may include more or fewer components than shown in the figure, or a combination of some components, or the components disposed differently. Details are not described herein again.

It can be understood that in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, and the like. The user input unit 607 may include at least one of a touch panel 6071 and other input devices 6072. The touch panel 6,071 is also referred to as a touchscreen. The touch panel 6071 may include two parts: a touch detection apparatus and a touch controller. The other input devices 6072 may include but are not limited to a physical keyboard, a function key (such as a volume control key or a power on/off key), a trackball, a mouse, a joystick, and the like. Details are not described herein.

In this embodiment of this application, the radio frequency unit 601 receives downlink data from a network-side device, and then sends the downlink data to the processor 610 for processing. In addition, the radio frequency unit 601 may send uplink data to the network-side device. Generally, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may include a first storage area for storing a program or instructions and a second storage area for storing data. The first storage area may store an operating system, an application program or instruction required by at least one function (for example, a sound playback function or an image playback function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 609 in the embodiments of this application includes but is not limited to these and any other suitable types of memories.

The processor 610 may include one or more processing units. Optionally, an application processor and a modem processor may be integrated in the processor 610. The application processor primarily processes operations involving an operating system, user interfaces, application programs, and the like. The modem processor primarily processes radio communication signals, for example, being a baseband processor. It can be understood that the modem processor may alternatively be not integrated in the processor 610.

The terminal may be a first device:
the radio frequency unit 601 is configured to receive a first signal and a second signal that are sent by a second device.

The processor 610 is configured to perform sensing measurement based on the first signal and the second signal.

Optionally, the processor 610 is further configured to:

obtain a measurement result of the second signal relative to the first signal; where
the measurement result includes at least one of the following:

a delay difference;
a frequency difference;
a phase difference;
a power difference;
an angle difference; and
a channel correlation.

Optionally, the second device is a network-side device, and the radio frequency unit 601 is further configured to:
send the measurement result to the second device.

Optionally, the second device is a network-side device, and the radio frequency unit 601 is further configured to:
receive first configuration information sent by the second device, where the first configuration information includes at least one of the following:

a time-frequency resource for the first signal and/or the second signal;
a transmission period of the first signal and/or the second signal;
a port number of the first signal and/or the second signal;
a random sequence generation parameter of the first signal and/or the second signal;
beam indication information of the first signal and/or the second signal;
first indication information for indicating a sensing measurement mode;
second indication information for indicating a type of the measurement result; and
third indication information for indicating a reporting resource for reporting information.

Optionally, the radio frequency unit 601 is further configured to:
receive second configuration information sent by the network-side device, where the second configuration information includes at least one of the following:

a time-frequency resource for the first signal and/or the second signal;
a transmission period of the first signal and/or the second signal;
a port number of the first signal and/or the second signal;
beam indication information of the first signal and/or the second signal;
a random sequence generation parameter of the first signal and/or the second signal; and
a transmission power of the first signal and/or the second signal.

Optionally, the first configuration information or the second configuration information may be carried by at least one of radio resource control RRC signaling, media access control MAC control element CE signaling, and downlink control information DCI signaling.

Optionally, the first signal and the second signal are frequency division multiplexed; or

the first signal and the second signal are time division multiplexed; or
the first signal and the second signal are code division multiplexed.

Optionally, a beam of the first signal is a reference beam for sensing measurement, and the beam of the first signal satisfies a first condition, where the first condition is that a ratio of a signal energy of a transmission path between the first device and the second device to a total energy of a received signal is greater than a first preset threshold;

and/or

a beam of the second signal is a sensing beam for sensing measurement, and the beam of the second signal meets a second condition, where the second condition is that a transmission path passing through a sensing area is present between the first device and the second device, and a ratio of a signal energy of the transmission path passing through the sensing area to a total energy of a received signal is greater than a second preset threshold.

Optionally, the processor 610 is further configured to:

determine, from the first signal and the second signal in a target determining manner, a signal corresponding to a reference beam for sensing measurement and a signal corresponding to a sensing beam for sensing measurement; where

the target determining manner is determined based on an explicit indication; or

the target determining manner is determined according to a configuration order in the first configuration information or the second configuration information.

Optionally, the processor 610 is further configured to:

determine a beam of the first signal as a reference beam for data communication, where a physical channel used by the data communication includes at least one of the following:

a physical downlink control channel PDCCH for reception;

a physical downlink shared channel PDSCH for reception;

a physical uplink control channel PUCCH for transmission; and

a physical uplink shared channel PUSCH for transmission.

Optionally, the processor 610 is further configured to perform at least one of the following:

performing radio frame synchronization based on the first signal; and

performing frequency synchronization based on the first signal.

Optionally, the processor 610 is further configured to:

perform a target operation; where

the target operation includes at least one of the following:

receiving, by the first device, a third signal sent by the second device, where the third signal is used for determining channel state information meeting the first condition; and

receiving, by the first device, a fourth signal sent by the second device, where the fourth signal is used for determining channel state information meeting the second condition.

Optionally, the third signal and/or the fourth signal are further used for determining a sensing measurement mode; where

in a case that the sensing measurement mode is single-beam measurement, a transmit beam of the first signal is the same as a transmit beam of the second signal; or

in a case that the sensing measurement mode is multi-beam measurement, the transmit beam of the first signal is different from the transmit beam of the second signal.

Optionally, the second device is a network-side device, and the radio frequency unit 601 is further configured to:

send the channel state information to the second device; where

the channel state information includes at least one of the following:

a signal strength of a signal meeting the first condition;

a signal strength of a signal meeting the second condition; and

channel correlation between the signal meeting the first condition and the signal meeting the second condition.

Optionally, the second device is a network-side device, and the processor 610 is further configured to perform at least one of the following:

performing, by the first device, beam training or codebook feedback, so that a beam energy of the first signal is concentrated on a transmission channel meeting the first condition; and

performing, by the first device, beam training or codebook feedback, so that a beam energy of the second signal is concentrated on a transmission channel meeting the second condition.

Optionally, the first signal and the second signal use different receive beams;

or

the first signal and the second signal are received using a broadcast beam;

or

the first signal and the second signal use a same receive beam.

The terminal may be a second device:
the radio frequency unit 601 is further configured to send a first signal and a second signal to a first device.

The first signal and the second signal are used by the first device to perform sensing measurement.

Optionally, the first signal and the second signal are used for the first device to perform sensing measurement to obtain a measurement result of the second signal relative to the first signal; and

the measurement result includes at least one of the following:

a delay difference;
a frequency difference;
a phase difference;
a power difference;
an angle difference; and
a channel correlation.

In this implementation, sensing measurement is performed based on the received first signal and second signal, and it is not necessary to use the change of multipath signals to implement measurement of sensing quantity, thereby reducing interference of unrelated multipaths on the sensing signal in a multipath environment and reducing measurement errors.

An embodiment of this application further provides a network-side device, including a processor and a communication interface. The communication interface is configured to receive a first signal and a second signal that are sent by a second device; and the processor is configured to perform sensing measurement based on the first signal and the second signal; or the communication interface is configured to send a first signal and a second signal to a first device; where the first signal and the second signal are used by the first device to perform sensing measurement. The network-side device embodiments correspond to the foregoing method embodiments on the first device side and the foregoing method embodiments on the second device side, and the implementation processes and implementations of the foregoing method embodiments can be applied to the network-side device embodiments, with the same technical effects achieved.

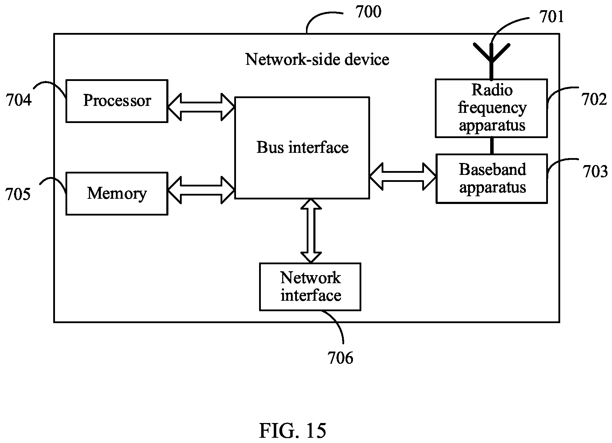

Specifically, an embodiment of this application further provides a network-side device. As shown in FIG. 15, the network-side device 700 includes an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information by using the antenna 701, and sends the received information to the baseband apparatus 703 for processing. In a downlink direction, the baseband apparatus 703 processes to-be-sent information, and sends the information to the radio frequency apparatus 702; and the radio frequency apparatus 702 processes the received information and then sends the information out by using the antenna 701.

The method executed by the network-side device in the foregoing embodiments can be implemented in the baseband apparatus 703, and the baseband apparatus 703 includes a baseband processor.

The baseband apparatus 703 may include, for example, at least one baseband board, where a plurality of chips are disposed on the baseband board. As shown in FIG. 15, one of the chips is, for example, a baseband processor, and is connected to the memory 705 through the bus interface, to invoke a program in the memory 705 to perform the operations of the network device shown in the foregoing method embodiments.

The network-side device may further include a network interface 706, where the interface is, for example, a common public radio interface (common public radio interface, CPRI).

Specifically, the network-side device 700 in this embodiment of the present invention further includes: an instruction or a program stored in the memory 705 and capable of running on the processor 704. The processor 704 invokes the instruction or program in the memory 705 to execute the method executed by the modules shown in FIG. 11 or FIG. 12, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the sensing measurement method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing sensing measurement method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing sensing measurement method embodiments, with the same technical effects achieved. To avoid repetition, details are not repeated herein.

An embodiment of this application further provides a sensing measurement system, including a first device and a second device, where the first device may be configured to perform the steps of the sensing measurement method on the first device side, and the second device may be configured to perform the steps of the sensing measurement method on the second device side.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separated. A component displayed as a unit may be one or more physical units, and may be located in one place, or may be distributed in a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure essentially, or the part contributing to the prior art, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling relevant hardware. The program may be stored in a computer readable storage medium. When the program runs, the processes of the method embodiments may be included. The storage medium may include: a magnetic disk, an optical disc, a read-only memory (Read-Only Memory, ROM), or a random access memory (Random Access Memory, RAM).

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A sensing measurement method, comprising:

    receiving, by a first device, a first signal and a second signal that are sent by a second device; and
    performing, by the first device, sensing measurement based on the first signal and the second signal.

2. The method according to claim 1, wherein after the performing, by the first device, sensing measurement based on the first signal and the second signal, the method further comprises:

    obtaining a measurement result of the second signal relative to the first signal; wherein
    the measurement result comprises at least one of the following:

        a delay difference;
        a frequency difference;
        a phase difference;
        a power difference;
        an angle difference; and
        a channel correlation.

3. The method according to claim 2, wherein the first device is a terminal and the second device is a network-side device, and after the obtaining a measurement result of the second signal relative to the first signal, the method further comprises:

sending, by the first device, the measurement result to the second device.

4. The method according to claim 1, wherein the first device is a terminal and the second device is a network-side device, and before the receiving, by a first device, a first signal and a second signal that are sent by a second device, the method further comprises: receiving, by the first device, first configuration information sent by the second device, wherein the first configuration information comprises at least one of the following:

    a time-frequency resource for the first signal and/or the second signal;
    a transmission period of the first signal and/or the second signal;
    a port number of the first signal and/or the second signal;
    a random sequence generation parameter of the first signal and/or the second signal;
    beam indication information of the first signal and/or the second signal;
    first indication information for indicating a sensing measurement mode;
    second indication information for indicating a type of the measurement result; and
    third indication information for indicating a reporting resource for reporting information.

5. The method according to claim 1, wherein the first device is a network-side device and the second device is a terminal, and before the receiving, by a first device, a first signal and a second signal that are sent by a second device, the method further comprises:
sending, by the first device, second configuration information to the second device, wherein the second configuration information comprises at least one of the following:

    a time-frequency resource for the first signal and/or the second signal;
    a transmission period of the first signal and/or the second signal;
    a port number of the first signal and/or the second signal;
    beam indication information of the first signal and/or the second signal;
    a random sequence generation parameter of the first signal and/or the second signal; and
    a transmission power of the first signal and/or the second signal.

6. The method according to claim 4 or 5, wherein the first configuration information or the second configuration information is carried by at least one of radio resource control RRC signaling, media access control MAC control element CE signaling, and downlink control information DCI signaling.

7. The method according to claim 1, wherein the first signal and the second signal are frequency division multiplexed; or

the first signal and the second signal are time division multiplexed; or
the first signal and the second signal are code division multiplexed.

8. The method according to any one of claims 1 to 5, wherein a beam of the first signal is a reference beam for sensing measurement, and the beam of the first signal satisfies a first condition, wherein the first condition is that a ratio of a signal energy of a transmission path between the first device and the second device to a total energy of a received signal is greater than a first preset threshold; and/or
a beam of the second signal is a sensing beam for sensing measurement, and the beam of the second signal meets a second condition, wherein the second condition is that a transmission path passing through a sensing area is present between the first device and the second device, and a ratio of a signal energy of the transmission path passing through the sensing area to a total energy of a received signal is greater than a second preset threshold.

9. The method according to claim 4 or 5, wherein after the receiving, by a first device, a first signal and a second signal that are sent by a second device, the method further comprises:

determining, from the first signal and the second signal in a target determining manner, a signal corresponding to a reference beam for sensing measurement and a signal corresponding to a sensing beam for sensing measurement; wherein
the target determining manner is determined based on an explicit indication; or
the target determining manner is determined according to a configuration order in the first configuration information or the second configuration information.

10. The method according to any one of claims 1 to 5, wherein the method further comprises:
determining, by the first device, a beam of the first signal as a reference beam for data communication, wherein a physical channel used by the data communication comprises at least one of the following:

a physical downlink control channel PDCCH for reception;

a physical downlink shared channel PDSCH for reception;
a physical uplink control channel PUCCH for transmission; and
a physical uplink shared channel PUSCH for transmission.

11. The method according to any one of claims 1 to 5, wherein the method further comprises at least one of the following:

performing, by the first device, radio frame synchronization based on the first signal; and
performing, by the first device, frequency synchronization based on the first signal.

12. The method according to claim 8, wherein before the receiving, by a first device, a first signal and a second signal that are sent by a second device, the method further comprises:

performing, by the first device, a target operation; wherein
the target operation comprises at least one of the following:

receiving, by the first device, a third signal sent by the second device, wherein the third signal is used for determining channel state information meeting the first condition; and
receiving, by the first device, a fourth signal sent by the second device, wherein the fourth signal is used for determining channel state information meeting the second condition.

13. The method according to claim 12, wherein the third signal and/or the fourth signal is further used for determining a sensing measurement mode; and

in a case that the sensing measurement mode is single-beam measurement, a transmit beam of the first signal is the same as a transmit beam of the second signal; or
in a case that the sensing measurement mode is multi-beam measurement, the transmit beam of the first signal is different from the transmit beam of the second signal.

14. The method according to claim 12, wherein the first device is a terminal and the second device is a network-side device, and after the performing, by the first device, a target operation, the method further comprises:

sending, by the first device, the channel state information to the second device; wherein
the channel state information comprises at least one of the following:

> a signal strength of a signal meeting the first condition;
> a signal strength of a signal meeting the second condition; and
> channel correlation between the signal meeting the first condition and the signal meeting the second condition.

15. The method according to claim 8, wherein the first device is a terminal and the second device is a network-side device, and before the receiving, by a first device, a first signal and a second signal that are sent by a second device, the method further comprises at least one of the following:

> performing, by the first device, beam training or codebook feedback, so that a beam energy of the first signal is concentrated on a transmission channel meeting the first condition; and
> performing, by the first device, beam training or codebook feedback, so that a beam energy of the second signal is concentrated on a transmission channel meeting the second condition.

16. The method according to claim 1, wherein the first signal and the second signal use different receive beams;
or

> the first signal and the second signal are received using a broadcast beam;
> or
> the first signal and the second signal use a same receive beam.

17. A sensing measurement method, comprising:

> sending, by a second device, a first signal and a second signal to a first device; wherein
> the first signal and the second signal are used by the first device to perform sensing measurement.

18. The method according to claim 17, wherein the first signal and the second signal are used for the first device to perform sensing measurement to obtain a measurement result of the second signal relative to the first signal; and
the measurement result comprises at least one of the following:

> a delay difference;
> a frequency difference;
> a phase difference;
> a power difference;
> an angle difference; and

a channel correlation.

19. The method according to claim 18, wherein the first device is a terminal and the second device is a network-side device, and after the sending, by a second device, a first signal and a second signal to a first device, the method further comprises:
receiving, by the second device, the measurement result sent by the first device.

20. The method according to claim 17, wherein the first device is a terminal and the second device is a network-side device, and before the sending, by a second device, a first signal and a second signal to a first device, the method further comprises:
sending, by the second device, first configuration information to the first device, wherein the first configuration information comprises at least one of the following:

> a time-frequency resource for the first signal and/or the second signal;
> a transmission period of the first signal and/or the second signal;
> a port number of the first signal and/or the second signal;
> a random sequence generation parameter of the first signal and/or the second signal;
> beam indication information of the first signal and/or the second signal;
> first indication information for indicating a sensing measurement mode;
> second indication information for indicating a type of the measurement result; and
> third indication information for indicating a reporting resource for reporting information.

21. The method according to claim 17, wherein the first device is a network-side device and the second device is a terminal, and before the sending, by a second device, a first signal and a second signal to a first device, the method further comprises:
receiving, by the second device, second configuration information sent by the first device, wherein the second configuration information comprises at least one of the following:

> a time-frequency resource for the first signal and/or the second signal;
> a transmission period of the first signal and/or the second signal;
> a port number of the first signal and/or the second signal;
> beam indication information of the first signal and/or the second signal;
> a random sequence generation parameter of the first signal and/or the second signal; and
> a transmission power of the first signal and/or the second signal.

22. A sensing measurement apparatus, wherein a first device comprises the sensing measurement apparatus, and the sensing measurement apparatus comprises:

a first receiving module configured to receive a first signal and a second signal that are sent by a second device; and
a measurement module, configured to perform sensing measurement based on the first signal and the second signal.

23. A sensing measurement apparatus, wherein a second device comprises the sensing measurement apparatus, and the sensing measurement apparatus comprises:

a first sending module configured to send a first signal and a second signal to a first device; wherein
the first signal and the second signal are used by the first device to perform sensing measurement.

24. A first device, comprising a processor, a memory, and a program or instructions stored in the memory and capable of running on the processor, wherein when the program or the instructions are executed by the processor, the steps of the sensing measurement method according to any one of claims 1 to 16 are implemented.

25. A second device, comprising a processor, a memory, and a program or instructions stored in the memory and capable of running on the processor, wherein when the program or the instructions are executed by the processor, the steps of the sensing measurement method according to any one of claims 17 to 21 are implemented.

FIG. 1

FIG. 2

Sensing target

Base station 2

Base
station 1

Terminal

FIG. 3

h0

h1(t0)

h1(t1)

Sensing movement of a user

FIG. 4

Start

A first device receives a first signal and a second
signal that are sent by a second device — 101

The first device performs sensing measurement
based on the first signal and the second signal — 102

End

FIG. 5

Sensing object

Omni-directional
beam

Terminal

Scattering object in an environment

FIG. 6

Sensing path

Channel response for
omni-directional beam

FIG. 7

Sensing object

Beamforming

Terminal

Scattering object in an
environment

FIG. 8

Sensing path

Channel response for
reference beam

Sensing path

Channel response
for sensing beam

FIG. 9

Start

A second device sends a first signal and a second signal
to a first device          201

End

FIG. 10

300

Sensing measurement
apparatus

First receiving module — 301

Measurement module — 302

FIG. 11

400

Sensing measurement apparatus

First sending module — 401

FIG. 12

500

Communication device

501 — Processor ⇔ Memory — 502

FIG. 13

600

| 601 ~ | Radio frequency unit | | Network module | ↗ 602 |

610 ~

| 609 ~ | Memory | | Audio output unit | ↗ 603 |
| | Application program | | | |
| | Operating system | | | |

604

| 608 ~ | Interface unit | | Input unit | |
| | | Processor | Graphics processing unit | ~ 6041 |
| | | | Microphone | ~ 6042 |

607 ~

| | User input unit | | 606 |
| 6071 ~ | Touch panel | | Display unit | 6061 |
| 6072 ~ | Other input devices | | Display panel | |

| | Sensor | ~ 605 |

FIG. 14

FIG. 15

## INTERNATIONAL SEARCH REPORT

| International application No. |
|---|
| **PCT/CN2023/088081** |

| A. | CLASSIFICATION OF SUBJECT MATTER |
|---|---|
| | H04W4/38(2018.01)i |

According to International Patent Classification (IPC) or to both national classification and IPC

| B. | FIELDS SEARCHED |
|---|---|

Minimum documentation searched (classification system followed by classification symbols)

IPC:H04W; H04B; G01S

Documentation searched other than minimum documentation to the extent that such documents are included in the fields searched

Electronic data base consulted during the international search (name of data base and, where practicable, search terms used)

CNTXT; ENTXT; ENTXT: 感知, 感测, 参考信号, RS, CSI-RS, SRS, PRS, 第一, 第二, 测量, 定位, 时延, 频率, 配置信号, sens+, reference signal, first, second, measur+, position+, locat+, delay, frequency, configuration signal

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021392516 A1 (QUALCOMM INCORPORATED) 16 December 2021 (2021-12-16) description, paragraphs 105-121, and figures 8-9 | 1-25 |
| X | CN 111511010 A (HUAWEI TECHNOLOGIES CO., LTD.) 07 August 2020 (2020-08-07) description, paragraphs 191-121, and figure 2 | 1-25 |
| A | CN 113727446 A (CHINA ACADEMY OF INFORMATION AND COMMUNICATIONS TECHNOLOGY) 30 November 2021 (2021-11-30) entire document | 1-25 |
| A | CN 113727448 A (CHINA ACADEMY OF INFORMATION AND COMMUNICATIONS TECHNOLOGY) 30 November 2021 (2021-11-30) entire document | 1-25 |
| A | US 2021373118 A1 (QUALCOMM INCORPORATED) 02 December 2021 (2021-12-02) entire document | 1-25 |
| A | US 2022053289 A1 (LIU JIN et al.) 17 February 2022 (2022-02-17) entire document | 1-25 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2023** | **19 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/088081**

| Patent document cited in search report | | | Publication date (day/month/year) | Patent family member(s) | | | Publication date (day/month/year) |
|---|---|---|---|---|---|---|---|
| US | 2021392516 | A1 | 16 December 2021 | WO | 2021252778 | A1 | 16 December 2021 |
| | | | | CN | 115698760 | A | 03 February 2023 |
| | | | | KR | 20230022850 | A | 16 February 2023 |
| CN | 111511010 | A | 07 August 2020 | WO | 2020155849 | A1 | 06 August 2020 |
| CN | 113727446 | A | 30 November 2021 | | None | | |
| CN | 113727448 | A | 30 November 2021 | | None | | |
| US | 2021373118 | A1 | 02 December 2021 | WO | 2021242599 | A1 | 02 December 2021 |
| | | | | TW | 202203667 | A | 16 January 2022 |
| | | | | KR | 20220164610 | A | 13 December 2022 |
| | | | | CN | 115777178 | A | 10 March 2023 |
| | | | | BR | 112022023189 | A2 | 20 December 2022 |
| US | 2022053289 | A1 | 17 February 2022 | US | 2023156432 | A1 | 18 May 2023 |
| | | | | CN | 114080020 | A | 22 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210389846